## Europäisches Patentamt
## European Patent Office
## Office européen des brevets

(19)

(11) Veröffentlichungsnummer: **0 149 202**
**B1**

(12)

# EUROPÄISCHE PATENTSCHRIFT

(45) Veröffentlichungstag der Patentschrift:
**01.04.87**

(51) Int. Cl.⁴: **C 12 G 1/02, B 01 F 7/04**

(21) Anmeldenummer: **84116016.1**

(22) Anmeldetag: **20.12.84**

(54) Liegender Behälter zur Behandlung von Weinmaische.

(30) Priorität: **13.01.84 DE 3401023**

(43) Veröffentlichungstag der Anmeldung:
**24.07.85 Patentblatt 85/30**

(45) Bekanntmachung des Hinweises auf die Patenterteilung:
**01.04.87 Patentblatt 87/14**

(84) Benannte Vertragsstaaten:
**AT CH FR IT LI**

(56) Entgegenhaltungen:
**DE - A - 3 200 712**
**GB - A - 724 791**
**GB - A - 757 179**
**US - A - 4 312 596**

(73) Patentinhaber: **Rieger, Herbert, Talstrasse 33,
D-7121 Ingersheim (DE)**

(72) Erfinder: **Rieger, Herbert, Talstrasse 33,
D-7121 Ingersheim (DE)**

(74) Vertreter: **Patentanwälte Kohler - Schwindling - Späth,
Hohentwielstrasse 41, D-7000 Stuttgart 1 (DE)**

**Beschreibung**

Die Erfindung bezieht sich auf einen liegenden Behälter zur Behandlung von Weinmaische, insbesondere einen Gärtank, mit einem Rührwerk, dessen Welle parallel zu einer Achse des Behälters verläuft, wobei die Welle mit einer Mehrzahl von im wesentlichen radial verlaufenden Rührflügeln versehen ist, die über die Länge der Welle verteilt im Abstand voneinander angeordnet und wenigstens abschnittsweise plattenartig ausgebildet sind, derart, dass die flache Seite des plattenartigen Abschnittes in Drehrichtung der Welle weist.

Ein derartiger Behälter ist aus der DE-OS 3 200 712 bekannt.

Behälter der eingangs genannten Art werden vorzugsweise bei der Herstellung von Rotwein verwendet. Bekanntlich befindet sich der rote Farbstoff der Rotweintrauben überwiegend in den Häuten und nicht im Fruchtfleich. Bei der Behandlung der Weinmaische zur Herstellung von Rotwein ist es daher erforderlich, den roten Farbstoff aus den Häuten herauszuwaschen. Hierzu bedient man sich der eingangs genannten Behälter mit einem Rührwerk, wobei diese Behälter beispielsweise als liegender Tank mit überwiegend kreiszylindrischer Form ausgebildet sind. In diesem Tank dreht sich ein Rührwerk mit plattenartigen Rührflügeln, mit denen eine effektive Durchmischung der Maische, d.h. des Gemenges aus dem Traubensaft und dem Trester, möglich ist.

Während man jedoch bei der Rotweinherstellung einerseits auf eine möglichst effektive Durchmischung der Maische bedacht ist, muss man andererseits darauf achten, dass die Maische nicht zu sehr bewegt wird, weil sich dies in einer Verminderung der Weinqualität niederschlagen kann. Aus diesem Grunde sieht man üblicherweise vor, das Rührwerk im Tank nur intervallweise arbeiten zu lassen, so dass die Maische in den Stillstandszeiten des Rührwerkes ruhen kann. Während dieser Stillstandszeiten setzen sich jedoch die leichteren Tresterbestandteile der Maische an der Oberfläche ab und verbacken wegen des hohen Zuckergehalts der Häute dort zu einem je nach Dauer der Stillstandszeit mehr oder weniger festen Tresterkuchen, der sich im Extremfall als harte Schicht an der Oberfläche der Maische ausbildet. Setzt man das Rührwerk nach Ablauf der Stillstandszeiten nun wieder in Gang, müssen die Rührflügel den sich gebildet habenden Tresterkuchen zerbrechen und die Bruchstücke möglichst schonend und effektiv in den Traubensaft nach unten eintauchen, dann wieder nach oben heben usw.

Für viele Anwendungsfälle haben sich die eingangs genannten plattenartigen Rührflügel bewährt, die auch in einer Form bekannt sind, bei der das freie Ende der Rührflügel in Drehrichtung abgewinkelt ist.

Andererseits hat sich jedoch gezeigt, dass noch weitere Verbesserungen wünschenswert sind, insbesondere für Rebsorten mit relativ niedrigem Saftanteil und damit Maischen von relativ hoher Zähigkeit.

Der Erfindung liegt daher die Aufgabe zugrunde, einen Behälter der eingangs genannten Art dahingehend weiterzubilden, dass die Durchmischung der Maische, insbesondere das Eintauchen von Stücken des Tresterkuchens in den Saft, noch effektiver geschieht, ohne dass eine Verschlechterung der Weinqualität durch zu intensives Durchmischen der Weinmaische eintritt.

Diese Aufgabe wird erfindungsgemäss dadurch gelöst, dass die Rührflügel im Bereich ihrer radial verlaufenden Kanten wenigstens abschnittsweise mit Seitenwänden versehen sind, die gegenüber dem radialen mittleren Bereich eines die flache Seite der Rührflügel bildenden Bodens geneigt sind.

Durch diese schaufelartige Ausbildung der Rührflügel wird ein erheblicher Vorteil erzielt. Während nämlich bei den bekannten plattenartigen Rührflügeln die Bruchstücke des Tresterkuchens beim Herabdrücken in den Traubensaft seitlich an den Rührflügeln vorbei wieder nach oben gelangen konnten, wird dies bei dem erfindungsgemässen Behälter durch die schräg eingesetzten Seitenwände verhindert. Die Bruchstücke des Tresterkuchens werden damit zwangsweise bis tief hinab in den Traubensaft gedrückt, so dass sich ein besonders effektives Auswaschen des roten Farbstoffes aus den Traubenhäuten ergibt. Die Arbeitsgeschwindigkeit des Rührwerkes braucht dabei nicht erhöht zu werden, so dass die Intensivierung der Durchmischung der Maische nicht mit Qualitätsverlusten des Weines erkauft werden muss. Die Erfindung bewirkt hingegen lediglich, dass die Verweilzeit der Bruchstücke des Tresterkuchens im Traubensaft und damit die Farbstoffauslaugung der Traubenhäute erhöht wird.

Praktische Versuche beim Anmelder haben ergeben, dass mit dem erfindungsgemässen Rührwerk eine deutlich verbesserte Auswaschung des roten Farbstoffes aus den Traubenhäuten erzielt werden kann. Dies gilt insbesondere für solche Maischen, die aufgrund eines relativ niedrigen Flüssigkeitsanteiles in der Traube breiig bzw. zäh sind. Eine Verminderung der Weinqualität konnte dabei nicht festgestellt werden.

Weiterhin ist eine Ausführungsform der Erfindung bevorzugt, bei der die Seitenwände über die ganze Länge der Kanten der Rührflügel verlaufen.

Diese Massnahme hat den Vorteil, dass beim Herabdrücken der Bruchstücke des Tresterkuchens in den Traubensaft die Bruchstücke im Bereich in Drehrichtung vor dem flachen Abschnitt der Rührflügel gehalten werden, so dass sie praktisch überhaupt nicht aus dem Bereich der Rührflügel «entweichen» können. Die Verweilzeit der Bruchstücke im Traubensaft ist daher besonders gross. Bei einer weiteren Ausführungsform der Erfindung liegen die Seitenwände an ihren an die Welle angrenzenden Enden kreisbogenartig am Umfang der Welle an.

Diese Massnahme verstärkt die vorstehend genannten Vorteile, weil die Bruchstücke des Tresterkuchens während der Drehbewegung der Rührflügel im Bereich der Seitenwände bis in den Bereich der Welle hinein von den Seitenwänden festgehalten werden.

Es sind jedoch auch Anwendungsfälle denkbar, bei denen vorzugsweise die Seitenwände ab einem Abstand von der Welle bis zum freien Ende des Rührflügels verlaufen.

Diese Massnahme kann mit Vorteil dann eingesetzt werden, wenn die mit den bis zur Welle durchgehenden Seitenwänden erzielbaren maximalen Verweilzeiten der Bruchstücke des Tresterkuchens im Traubensaft nicht erforderlich sind und ein Rührwerk mit radial etwas verkürzten Seitenwänden und damit auch geringerer Antriebsleistung des Rührwerkes ausreicht. Das innere Ende der Seitenwände kann mittels einer Rückwand vorteilhaft abgeschlossen werden, so dass sich auch bei abgesetzten Seitenwänden eine geschlossene schaufelartige Form einstellt.

Weiter ist eine Ausführungsform der Erfindung bevorzugt, bei der das freie Ende der Seitenwände mit dem Umfang der Welle fluchtet.

Diese Massnahme hat insbesondere bei bis zur Welle durchgehenden Seitenwänden den Vorteil, dass die vom radialen Rührflügel, den Seitenwänden und der Welle gebildete schaufelartige Form das maximal zur Verfügung stehende Volumen ausnutzt.

Dieser Vorteil kann weiterhin noch dadurch erhöht werden, dass die Rührflügel in weiterer Ausgestaltung der Erfindung an ihrem freien Ende mit einer Vorderwand versehen sind, die gegenüber dem radialen mittleren Bereich des Bodens geneigt ist und die seitlich in die Seitenwände übergeht.

Derartige Vorderwände sind zwar an sich — wie weiter oben bereits erwähnt — als abgewinkelte Enden plattenartiger Rührflügel bekannt, sie sind jedoch besonders von Vorteil in Verbindung mit den erfindungsgemässen Seitenwänden, weil die von dem Rührflügel, den Seitenwänden, der Vorderwand und ggf. der Welle gebildete schaufelartige Form gewährleistet, dass die in ihr Volumen gelangenden Bruchstücke des Tresterkuchens so lange festgehalten werden, bis sich der Rührflügel insgesamt wieder durch den Traubensaft nach oben bewegt.

Bei einer weiteren Ausführungsform der Erfindung, bei welcher der Boden tangential zum Umfang der Welle verläuft, wird ein besonders grosses Volumen der schaufelartigen Form erzielt.

Eine weitere Art von Rührwerken kann in Ausgestaltung der Erfindung dadurch hergestellt werden, dass die sich im wesentlichen radial erstreckenden Böden jeweils mit einem sich in die eine Drehrichtung der Welle öffnenden Paar Seitenwände und einem sich in die entgegengesetzte Drehrichtung öffnenden Paar Seitenwände versehen sind.

Diese Massnahme hat den besonderen Vorteil, dass das Rührwerk durch die klappsymmetrische Form der Rührflügel mit den Seitenwänden in zwei entgegengesetzten Drehrichtungen betrieben werden kann, wobei jeweils ein Paar Seitenwände in einer Drehrichtung das Festhalten der Bruchstücke des Tresterkuchens übernimmt und in der entgegengesetzten Drehrichtung diese Aufgabe vom jeweils anderen Paar Seitenwände übernommen wird. Da die Bruchstücke in dieser Betriebsart bei Drehrichtungsumkehr vom einen Paar Seitenwände des einen Rührflügels hinüber zu einem entgegengesetzten Paar eines anderen oder desselben Rührflügels wandern, eröffnet sich die Möglichkeit, durch alternierendes Drehen in beiden Drehrichtungen den Rührvorgang und damit das Auswaschen der Traubenschalen noch weiter zu intensivieren.

Erfindungsgemäss können die Elemente «Boden», «Seitenwand» und «Vorderwand» als Einzelelemente in Gestalt von jeweils ebenen Flächen vorgesehen sein; in bevorzugter Ausgestaltung der Erfindung können diese Elemente jedoch gemeinsam durch einen konkav gekrümmten Boden gebildet werden.

Diese Massnahme hat u.a. den Vorteil, dass konkave Flächen aufgrund fehlender Ecken leichter gereinigt werden können, so dass ein besonders hygienischer Betrieb des erfindungsgemässen Behälters gewährleistet werden kann.

Gemäss einer weiteren Ausführungsform der Erfindung sind die Rührflügel mit Böden und Seitenwänden und ggf. Vorderwänden als mindestens ein Hohlprofil aus einem vorzugsweise einstückigen Zuschnitt ausgebildet.

Diese Massnahme hat den Vorteil, dass die Rührflügel besonders einfach hergestellt werden können und aufgrund ihrer hohlen Struktur nur ein geringes Gewicht aufweisen. Dies ist von Vorteil für die Konstruktion des Behälters, in dem sich nur ein relativ leichtes Rührwerk drehen muss, und ausserdem werden dadurch die beim Anfahren des Rührwerkes, insbesondere bei alternierendem Betrieb erforderlichen Antriebsleistungen, vermindert.

Will man im weiter oben beschriebenen Sinne eine alternierende Betriebsweise in den beiden Drehrichtungen einstellen, ist es von Vorteil, wenn die Rührflügel als zwei klappsymmetrische Hohlprofile mit radial zur Welle verlaufender Symmetriebene ausgebildet sind.

Diese Massnahme vereinigt die Vorteile der alternierenden Betriebsart mit denen einer Leichtbauweise für die Rührflügel.

Bildet man, wie vorstehend beschrieben, den Rührflügel als Hohlprofil aus einem die Abwicklung des Hohlprofils darstellenden Zuschnitt her, eröffnet sich eine Vielfalt von möglichen Formgebungen des Querschnittes.

So sind Ausführungsformen der Erfindung bevorzugt, bei denen der Querschnitt eine U-förmige Gestalt oder die Gestalt zweier mit der flachen Seite aneinanderliegender U hat oder eine I-förmige Gestalt oder eine C-förmige oder eine doppelte C-förmige Gestalt.

Bei Verwendung einer konkav gekrümmten Boden/Seitenwandfläche kann der Querschnitt auch eine diaboloförmige Gestalt aufweisen.

Eine weitere bevorzugte Gestaltung der Querschnittsfläche ergibt sich, wenn der Boden Teil eines im Querschnitt wenigstens näherungsweise rechteckförmigen Abschnittes ist, von dessen Enden weg die Seitenwände als zweilagige Falte ausgeformt sind.

Diese Querschnittsform hat den Vorteil, dass der rechteckförmige Abschnitt dem Rührflügel eine stabile und einfache mechanische Gestalt verleiht und die Seitenwände als zweilagige Falte durch einfaches Umkanten eines einstückigen Querschnittes ausgebildet werden können, ohne dass es erforderlich ist, die Seitenwände als separate Bauteile an den rechteckförmigen Abschnitt anzuschweissen.

Weiterhin bevorzugt ist dabei eine Ausführungsform, bei der die Falte abgekröpft ist.

Diese Massnahme hat den Vorteil, dass der rechteckförmige Abschnitt gerade so gross gehalten werden kann, wie dies für seine mechanische Stabilität erforderlich ist. Durch die abgekröpfte Falte wird dabei ein ausreichendes Volumen der schaufelartigen Form des Rührflügels gewährleistet.

Eine weitere Gruppe von erfindungsgemässen Behältern weist ein Rührwerk auf, deren Rührflügel sich dadurch auszeichnen, dass der Boden Teil eines im Querschnitt wenigstens annäherungsweise rechteckförmigen Abschnitte ist, von dessen Kanten die Seitenwände ausgehen, wobei von den zwei Rechteckseiten und der einen Seitenwand jeweils zwei Teile einstückig und das dritte angeschweisst ist bzw. sind.

Diese Massnahme hat den Vorteil, dass trotz des Vorsehens separater Teile und damit der Notwendigkeit des Verschweissens dieser Teile miteinander auch komplizierte Querschnittsformen hergestellt werden können, deren Abwicklungen bzw. deren Abkanten zu komplizierten Herstellungsprozessen führen würden.

Wenn die Seitenwände von den radialen Kanten der ebenen Bodenflächen der Rührflügel frei abstehen und die Rührflügel für alternierenden Betrieb des Rührwerkes klappsymmetrisch ausgebildet sind, können sich zwischen den Seitenwänden aneinanderliegender Rührflügelseiten Bereiche bilden, in denen sich während des Rührens feste Bestandteile der Maische festsetzen.

Um dies zu verhindern, ist in weiterer Ausgestaltung der Erfindung vorgesehen, bei derartigen Rührflügeln die freien Enden der Paare von Seitenwänden mittels eines radialen Seitenwandabschlusses miteinander zu verbinden.

Diese Massnahme hat den Vorteil, dass sich zwischen den Seitenwänden keine Hohlräume mehr befinden und sich demzufolge auch keine Bestandteile dort absetzen können. Es wird daher auch mit dieser Massnahme die hygienische Betriebsweise des erfindungsgemässen Behälters weiter verbessert.

In entsprechender Weise kann bei einem anderen Ausführungsbeispiel der Erfindung vorgesehen sein, die freien Enden der Vorderwände mittels eines tangentialen Vorderwandabschlusses miteinander zu verbinden.

Im letztgenannten Fall ist eine Ausführungsform besonders bevorzugt, bei welcher der Vorderwandabschnitt nach aussen gewölbt ist und sich in der Nähe der Wandung eines kreiszylindrischen Abschnittes des Behälters befindet, wobei die Wölbung parallel zur Wandung verläuft.

Diese Massnahme hat den Vorteil, dass sich zwischen dem Vorderwandabschnitt und der gewölbten Wandung kein Hohlraum ausbilden kann, wie dies bei einem geraden Vorderwandabschnitt, der als Sehne zum kreiszylindrischen Abschnitt des Behälters verläuft, der Fall wäre.

Die axiale Positionierung der Rührflügel auf der Rührwerkswelle kann in unterschiedlicher Weise, je nach vorliegender Konsistenz der Maische, variiert werden.

Bei einer Ausführungsform der Erfindung sind die Rührflügel so weit in axialem Abstand voneinander auf der Welle angeordnet, dass sich ihre Bewegungsbahnen nicht überschneiden.

Diese Ausführungsform der Erfindung ist dann von Vorteil einzusetzen, wenn es zweckmässig ist, dass sich zwischen den einzelnen Rührflügeln radiale Schichten ausbilden, in denen die Maische nicht im Eingriffsbereich der Rührflügel liegt. Mit anderen Worten, es eignet sich diese Ausführungsform der Erfindung für diejenigen Fälle, in denen eine weniger intensive Durchmischung der Maische ausreicht.

Demgegenüber ist in einer anderen Ausführungsform der Erfindung vorgesehen, dass die Rührflügel vorzugsweise einen in Drehrichtung der Welle rechteckförmigen Umriss haben und ihre Bewegungsbahnen aneinandergrenzen.

Bei dieser Ausführungsform der Erfindung ist die Dicke der zwischen den Rührflügeln verlaufenden radialen Schichten, die nicht von den Rührflügeln beeinträchtigt werden, auf Null vermindert. Mit anderen Worten, diese Ausführungsform der Erfindung eignet sich für diejenigen Maischen, die mit etwas höherem Grad von Durchmischung gerührt werden müssen.

Schliesslich ist eine weitere Ausführungsform der Erfindung vorgesehen, bei der die Umrisse der Rührflügel in Drehrichtung der Welle so breit gewählt sind, dass ihre Bewegungsbahnen einander überschneiden. Die Rührflügel können dabei in radialer Richtung gerade verlaufen, d.h. einen rechteckförmigen Umriss haben, sie können sich jedoch auch radial nach aussen oder radial nach innen verjüngen.

Insgesamt haben die Ausführungsformen der Erfindung mit Rührflügeln, deren Bewegungsbahnen sich überschneiden, den Vorteil, dass eine maximale Durchmischung der Maische erfolgt, weil mit Ausnahme geringer Wandbereiche des Behälters das gesamte Volumen der Maische durchrührt wird, wobei die Maische im Überschneidungsbereich der Bewegungsbahnen entlang eines schlangenförmig gekrümmten Weges bewegt wird.

Bei einer weiteren Gruppe erfindungsgemässer Behälter ist vorgesehen, dass sich in oder an den Böden und/oder Seitenwänden und/oder Vorderwänden und/oder Rückwänden Hohlräume befinden, in die ein Wärmetauschmedium einleitbar ist.

Diese Massnahme hat den wesentlichen Vorteil, dass einmal beim Starten der Gärung die Maische durch Aufheizen auf die sog. Gärstarttemperatur gebracht werden und dass zum anderen während des Gärens, bei dem sich infolge des Gärprozesses eine Eigenwärme in der Maische entwickelt, eine zu grosse Erwärmung der Maische durch Einleiten eines Kühlmittels verhindert werden kann. Es kann also durch Aufheizen zunächst der Gärbeginn beschleunigt werden. Zum anderen kann aber auch durch späteres Kühlen eine zu hohe Eigenerwärmung der Maische und damit eine Qualitätseinbusse vermieden werden; dies gilt insbesondere, wenn der Behälter in einem warmen Raum steht oder sich die Gärung bei relativ hohen Aussentemperaturen, die auf den Behälter einwirken, abspielt.

Erfindungsgemäss kann dabei das Wärmetauschmedium von der hohl ausgebildeten Welle des Rührwerkes zugeführt werden.

Die Massnahme hat den Vorteil, dass das Wärmetauschmedium besonders einfach zu den als Wärmetauschern wirkenden Rührflügeln zugeführt werden kann, ohne dass dies von aussen erkennbar wird. Das Rührwerk ändert damit seine äussere Form und Oberfläche nicht und kann daher wie ein übliches Rührwerk gereinigt werden.

Weiterhin ist eine Ausführungsform bevorzugt, bei der die Hohlräume sprossenleiterartig angeordnet sind, wobei sich die Sprossen in axialer Richtung und die Stangen zum Zu- und Abführen des Wärmetauschmediums in radialer Richtung in oder an der jeweiligen Wandung erstrecken.

Diese Massnahme hat den Vorteil, dass bei entsprechend dichter Anordnung der Sprossen die als Wärmetauscher wirkenden Flächen des Rührflügels besonders effektiv aufgeheizt bzw. abgekühlt werden können.

Dies kann in weiterer Ausgestaltung der Erfindung auch dadurch bewirkt werden, dass die Hohlräume schlangenförmig in oder an der jeweiligen Wandung angeordnet sind.

Schliesslich ist noch eine Ausführungsform der Erfindung bevorzugt, bei der zum Wärmetauschen die Hohlräume durch Stege zwischen den Rücken der klappsymmetrisch angeordneten Hohlprofile gebildet werden.

Diese Massnahme hat den Vorteil, dass die Hohlräume durch einfache konstruktive Massnahmen hergestellt werden können, ohne dass aufwendige Werkzeuge zum Herstellen der als Wärmetauscher wirkenden Rührflügel erforderlich sind.

Eine weitere Ausführungsform der Erfindung zeichnet sich dadurch aus, dass zum Verhindern eines Abrutschens der Weinmaische in radialer Richtung an den Rührflügeln der deren flachen Seite bildende Boden mit wenigstens einem höckerartigen Hindernis von wenigstens teilweise axialer Erstreckung versehen ist. Insbesondere ist das Hindernis dabei im radialen Schnitt prismatisch oder halbzylindrisch ausgebildet.

Diese Massnahme hat den Vorteil, dass insbesondere beim Durchlaufen der unteren Extremlage des Rührflügels ein Hochrutschen der vom Rührflügel festgehaltenen festen Maischebestandteile verhindert wird, eine Gefahr, die besonders dann besteht, wenn die Maische intensiv gärt und sich Gärgase beim Herabdrücken der festen Maischebestandteile unterhalb des Volumens des Rührflügels gebildet haben. Diese vom Rührflügel in der Maische festgehaltenen Gärgase bewirken einen erheblichen Auftrieb, so dass nach dem Durchlaufen der unteren Extremlage im genannten Falle die festgehaltenen festen Maischebestandteile schlagartig nach oben entweichen können, wenn nicht ein entsprechendes Hindernis diese Bewegung verhindert oder zumindest erschwert.

Weitere Vorteile ergeben sich aus der Beschreibung und der beigefügten Zeichnung.

Es versteht sich, dass die vorstehend genannten sowie die nachstehend anhand der Zeichnung noch erläuterten Merkmale jeweils für sich allein sowie in beliebiger Kombination im Rahmen der Erfindung wirken können.

Die Erfindung ist in der Zeichnung dargestellt und wird in der nachfolgenden Beschreibung näher erläutert. Es zeigen:

Fig. 1 einen Querschnitt senkrecht zur Achse einer Ausführungsform eines erfindungsgemässen Behälters;

Fig. 2 einen Querschnitt entsprechend Fig. 1, jedoch parallel zur Achse des Behälters;

Fig. 3a einen radialen Querschnitt durch eine Ausführungsform eines Rührflügels;

Fig. 3b einen axialen Schnitt durch die Ausführungsform von Fig. 3a;

Fig. 3c einen radialen Schnitt durch eine weitere Ausführungsform eines Rührflügels, ähnlich derjenigen von Fig. 3a;

Fig. 4a einen radialen Schnitt durch eine weitere Ausführungsform eines in beidenDrehrichtungen wirksamen Rührflügels;

Fig. 4b einen axialen Schnitt der Ausführungsform gemäss Fig. 4a;

Fig. 4c eine Draufsicht auf ein sprossenleiterartig angeordnetes Wärmetauschsystem in einem Rührflügel gemäss Fig. 4a;

Fig. 4d einen gewölbten Vorderwandabschluss als Variation eines Rührflügels gemäss Fig. 4a;

Fig. 5 eine schematische Draufsicht von auf der Rührwerkswelle axial versetzten Rührflügeln, deren schaufelförmiger Bereich von der Rührwerkswelle abgesetzt ist; mit unterschiedlichen Grenzen der Bewegungsbahnen der Rührflügel;

Fig. 6 eine Darstellung wie Fig. 5, jedoch mit Rührflügeln, deren schaufelartige Form bis zum Bereich der Rührwerkswelle reicht;

Fig. 7 einen axialen Querschnitt durch einen Rührflügel mit I-förmigem bzw. doppel-U-förmigem Querschnitt in zwei Varianten;

Fig. 8 eine Darstellung wie Fig. 7, jedoch für einen Rührflügel mit diaboloförmigem Querschnitt;

Fig. 9 eine Darstellung wie Fig. 7, jedoch für einen Rührflügel mit rechteckförmigem Abschnitt und angefalteten bzw. angeschweissten Seitenwänden;

Fig. 10 eine Darstellung wie Fig. 9, jedoch mit drei Varianten;

Fig. 11 eine Darstellung wie Fig. 8 mit diaboloförmigem Querschnitt, jedoch abweichenden inneren Seitenwänden.

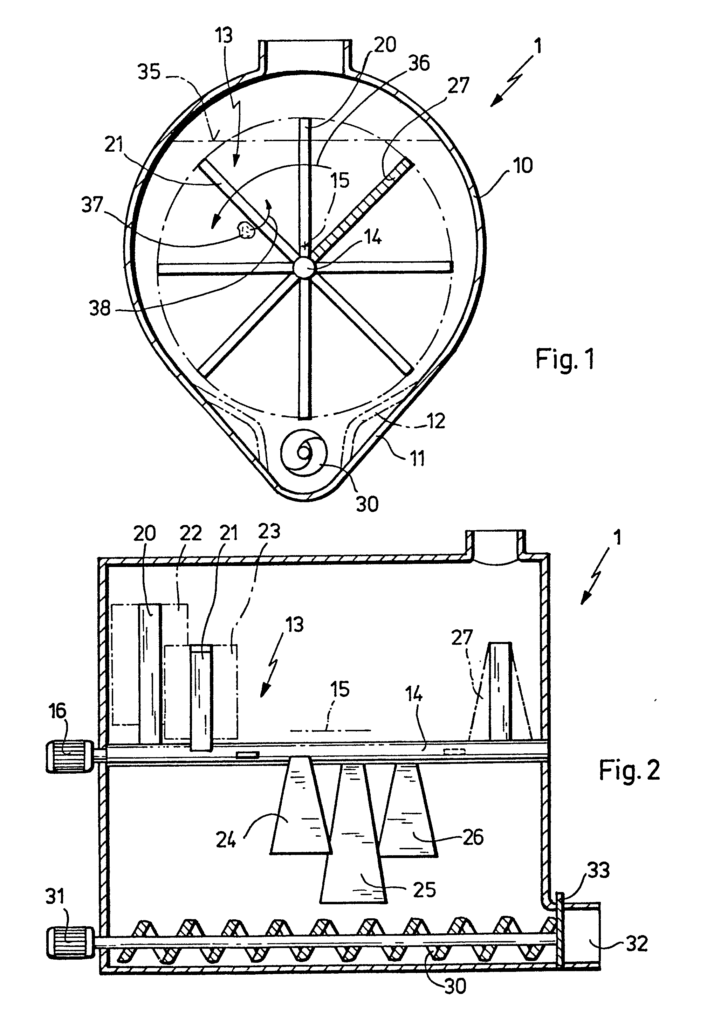

In den Fig. 1 und 2 bezeichnet 1 insgesamt einen erfindungsgemässen Behälter zur Behandlung von Weinmaische, insbesondere Rotweinmaische. Der Behälter 1 ist ein liegender Behälter, der mit in den Figuren nicht dargestellten Stützen auf einem Boden eines Raumes in einem Kellereibetrieb aufliegt.

Der Behälter 1 unterteilt sich in einen kreiszylindrischen Abschnitt 10 sowie einen konischen Abschnitt 11, der auch als rinnenförmiger Abschnitt 12 ausgestaltet sein kann. Im Behälter 1 befindet sich ein ebenfalls liegend angeordnetes Rührwerk 13 mit einer Welle 14, die parallel zur Achse 15 des Behälters verläuft, nicht jedoch mit dieser zusammenfallen muss. Beim bevorzugt dargestellten Ausführungsbeispiel gemäss Fig. 1 und 2 verläuft die Welle 14 des Rührwerkes 13 etwas unterhalb der Achse 15 des Behälters 1.

Auf der Welle 14 sind, axial verteilt, mehrere Rührflügel angeordnet, von denen einige Beispiele in Fig. 2 dargestellt sind. Es versteht sich, dass das Rührwerk im allgemeinen jeweils nur mit einer Art von Flügeln bestückt ist, es können jedoch auch unterschiedliche Rührflügel auf einer gemeinsamen Welle 14 angeordnet sein. Es versteht sich weiter, dass die Rührflügel nicht nur axial über der Welle 14 verteilt sein können, sondern gleichfalls in Umfangsrichtung, d.h. es können aus einer axialen Position der Welle 14 mehrere Rührflügel radial vorstehen, die in Drehrichtung über bestimmte Winkel gegeneinander versetzt sind.

Bei den in Fig. 2 dargestellten Beispielen sind 20 und 21 paddelartige Rührflügel, die entweder schmal oder, wie mit 22 und 23 angedeutet, in axialer Richtung breit ausgebildet sein können. Wie weiter unten noch erläutert werden wird, bedeutet dies, dass die Bewegungsbahnen der Rührflügel 20, 21 einander nicht überschneiden, während sich die Bewegungsbahnen der Rührflügel 22 und 23 axial überlappen bzw. überschneiden.

Eine weitere Ausführungsform der Erfindung kann aus Rührflügeln 24, 25, 26 bestehen, die sich konisch zur Welle 14 hin verjüngen. Dabei laufen die Rührflügel 24 bis 26 radial nach aussen so weit auseinander, dass sich im Endbereich ihre Bewegungsbahnen wieder überschneiden.

Schliesslich können die Rührflügel aber auch in der Weise konisch ausgebildet sein, dass sie sich nach aussen verjüngen, wie dies mit 27 in Fig. 2 angedeutet ist.

Insgesamt soll damit gezeigt werden, dass bei den Rührflügeln 20 bis 27 eine grosse Vielfalt von Formen möglich ist, je nachdem welche Art von Maische mit dem erfindungsgemässen Behälter 1 behandelt werden soll.

Es ist im Rahmen der vorliegenden Erfindung selbstverständlich auch möglich, in einem Behälter 1 durch Auswechseln der Rührflügel diesen Behälter 1 für unterschiedliche Maischearten verwendbar zu machen.

Der erfindungsgemässe Behälter 1 weist im Bereich des konischen Abschnittes 11 bzw. des rinnenförmigen Abschnittes 12 noch eine Austragschnecke 30 auf.

Es sind demzufolge zwei Antriebsmotoren erforderlich, nämlich einmal ein erster Antriebsmotor 16 für das Rührwerk 13 und zum anderen ein zweiter Antriebsmotor 31 für die Austragschnecke 30. Es versteht sich jedoch, dass die beiden Aggregate 13, 30 auch von einem gemeinsamen Antriebsmotor über entsprechende Getriebe angetrieben werden können.

Die Austragschnecke 30 fördert das auszutragende Gut schliesslich einer Austragöffnung 32 zu, die während der Behandlung der Weinmaische durch das Rührwerk 13 mittels eines Schiebers 33 verschlossen ist.

In Fig. 1 ist mit 35 der Tresterkuchen angedeutet, der sich an der Oberfläche der Maische während einer Stillstandszeit des Rührwerkes 13 absetzt. Bei der mit 36 in Fig. 1 angedeuteten Drehrichtung des Rührwerkes 13 hat in der in Fig. 1 dargestellten Position der Rührflügel 20 gerade den Tresterkuchen 35 durchstossen, während der Rührflügel 21 bereits ein Bruchstück 37 des Tresterkuchens nach unten in den Traubensaft hineindrückt. Aufgrund der lediglich plattenartigen Ausbildung des Rührflügels 21 bei bekannten Behältern kann das Bruchstück 37 nun jedoch in einer Richtung 38 seitlich an dem Rührflügel 21 vorbeirutschen und wieder nach oben in den Bereich des Tresterkuchens 35 aufsteigen. Die Verweilzeit des Bruchstückes 37 im Traubensaft ist damit nur sehr kurz, weil bei einer plattenartigen Ausbildung des Rührflügels 21 das Bruchstück 37 nicht bis nach unten in den Traubensaft eingetaucht werden kann.

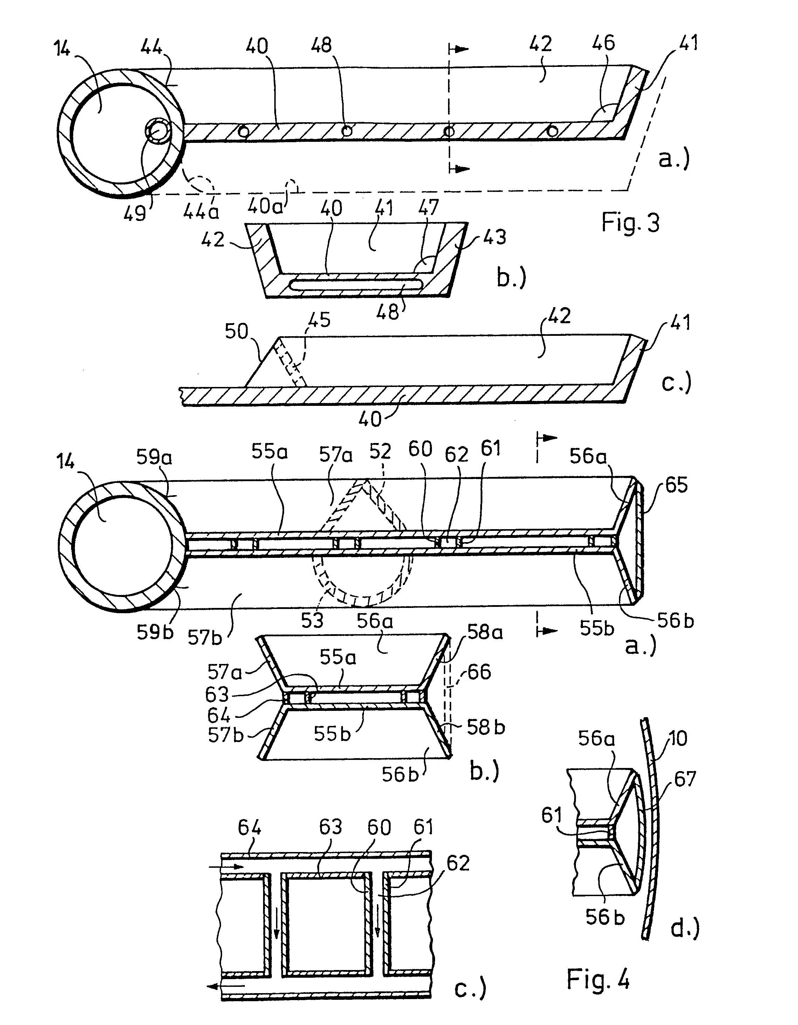

Fig. 3a zeigt nun einen radialen Schnitt und Fig. 3b einen axialen Schnitt durch einen Rührflügel, wie er für die Rührflügel 20 bis 27 gemäss Fig. 1 und 2 verwendet werden kann und der den vorstehend geschilderten Nachteil vermeidet.

Der in Fig. 3 dargestellte Rührflügel weist einen ebenen Boden 40 auf, der am freiem Ende des Rührflügels in eine abgewinkelte Vorderwand 41 übergeht. In axial seitlicher Richtung wird der Boden 40 durch angewinkelte Seitenwände 42 und 43 begrenzt. Die freien Kanten der Vorderwand 41 sowie der Seitenwände 42, 43 fluchten dabei mit dem Umfang der als Hohlwelle ausgebildeten Welle 14 des Rührwerkes 13. Es entsteht damit über dem Boden 40 und eingegrenzt von der Vorderwand 41, den Seitenwänden 42, 43 sowie einem Umfang 44 der Welle 14 ein schaufelförmiges Volumen, aus dem ein Bruchstück 37 des Tresterkuchens 35 nicht mehr entweichen kann, solange sich der Rührflügel nach unten bewegt. Erst wenn der Rührflügel sich nach Durchlaufen des unteren Totpunktes wieder nach oben bewegt, kann das Bruchstück 37 aus dem vorstehend definierten Volumen des Rührflügels nach oben aufsteigen, sofern die Aufstiegsgeschwindigkeit grösser ist als die Drehgeschwindigkeit des Rührflügels.

Wie man aus Fig. 3 erkennen kann, ist eine Variante des Rührflügels gemäss Fig. 3a dadurch möglich, dass die Seitenwände 42, 43 nicht über die ganze radiale Länge der Kanten des Bodens 40 geführt sind, sondern lediglich über einen Teil, und zwar in der Weise, dass die Seitenwände 42, 43 erst in einem Abstand von der Welle 14 beginnen und sich bis zur Vorderwand 41 hin erstrecken. Der innere Teil der Seitenwände 42, 43 kann dann entweder von einer ebenfalls schräg angestellten Rückwand 45 gebildet werden oder die Seitenwände 42, 43 laufen in eine freie schräge Kante 50 aus. Während im ersten Fall wieder ein auf fünf Seiten abgeschlossenes schaufelartiges Volumen entsteht, bei dem lediglich anstelle des Umfanges 44 die schräge Rückwand 45 getreten ist und ein, verglichen mit Fig. 3a, geringeres Volumen erzielt wird, ist die schaufelartige Form bei der Variante mit der freien Kante 50 an dieser Stelle offen, dies kann jedoch häufig dann in Kauf genommen werden, wenn die Drehgeschwindigkeit des Rührwerkes 13 so gross ist, dass sich die Bruchstücke 37 des Tresterkuchens 35 infolge der Drehung der Rührflügel ohnehin auf dem Boden 40 gleitend, radial nach aussen zur Vorderwand 41 hin bewegen.

Während sich der Boden 40 beim Ausführungsbeispiel gemäss Fig. 3a exakt in radialer Richtung erstreckt, kann auch eine Ausführungsform gewählt werden, bei der ein Boden 40a tangential vom Umfang der Welle 14 ausgeht, wobei zweckmässigerweise zur Vermeidung von schlecht zu reinigenden Hohlräumen ein Umfang 44a vorgesehen ist, der den Übergang vom Boden 40a zum Umfang der Welle 14 bildet. Wie man ohne weiteres aus den gestrichelt eingezeichneten Elementen 40a und 44a in Fig. 3a erkennt, ergibt sich bei dieser Variante ein noch grösseres Volumen der schaufelartigen Rührflügelform.

In Fig. 3a ist der Anstellwinkel der Vorderwand 41 zum Boden 40 mit 46 und in Fig. 3b der Anstellwinkel der Seitenwände 42, 43 zum Boden 40 mit 47 bezeichnet. Die Winkel 46, 47 können in einem weiten Bereich variieren, bevorzugt ist jedoch ein Ausführungsbeispiel, bei dem diese Winkel gleich sind und im Bereich zwischen 100° und 150° liegen.

Schliesslich zeigen die Ausführungsformen gemäss Fig. 3a und 3b noch die Möglichkeit, den Rührflügel als Wärmetauscher zu benutzen.

Hierzu sind im Boden 40 mehrere axial verlaufende Hohlräume 48 vorgesehen, die über geeignete Stichleitungen zum Zu- bzw. Abströmen des Wärmetauschmediums versorgt werden. Die Versorgung erfolgt zweckmässigerweise vom Inneren der hohlen Welle 14 her, und zwar über eine Leitung 49.

Das Wärmetauschmedium in den Hohlräumen 48 kann sowohl zum Aufheizen wie auch zum Kühlen der Maische dienen. Wird die Maische in kaltem Zustand eingefüllt, kann man durch Aufheizen der Maische den Gärbeginn beschleunigen. Während des Gärens entwickelt sich jedoch eine bestimmte Eigenwärme der Maische, so dass es zweckmässig sein kann, zur Vermeidung von Qualitätseinbussen die Maische auf eine bestimmte Temperatur zu kühlen und damit die Gärwärme abzuführen.

Ein weiteres Ausführungsbeispiel der Erfindung ist in den Fig. 4a bis 4d dargestellt. Die Darstellungen der Fig. 4a und 4b entsprechen den Darstellungen der Fig. 3a und 3b. In Abweichung zum Ausführungsbeispiel gemäss Fig. 3 zeigt das Ausführungsbeispiel gemäss Fig. 4 jedoch einen Rührflügel, der in beide Drehrichtungen wirksam ist. Hierzu sind an die Welle 14 zwei radiale Böden 55a, 55b angesetzt, die an ihren freien Enden in schräge Vorderwände 56a, 56b übergehen. An den seitlichen Kanten sind entsprechende Seitenwände 57a, 57b bzw. 58a, 58b vorgesehen. Damit bilden sich wieder zusammen mit Umfängen 59a, 59b Volumina für eine schaufelartige Rührflügelform, die jedoch in beiden Drehrichtungen des Rührwerkes 13 wirksam ist. Man erkennt weiterhin aus den Fig. 4a bis 4c, dass zwischen den Böden 55a, 55b Querstege 60, 61 in axialer Richtung vorgesehen sind, die zwischen sich Hohlräume 62 einschliessen. Die Querstege 60, 61 münden in Längsstege 63 bzw. 64, so dass insgesamt in einer Draufsicht (von oben in Fig. 4a und 4b) ein sprossenleiterartiges Gebilde von Hohlräumen entsteht, wie dies Fig. 4c zeigt. Durch die eingezeichneten Pfeile wird angedeutet, dass ein Wärmetauschmedium durch die «Stangen» der Sprossenleiter zu- bzw. abgeführt werden kann, während durch die als «Sprossen» wirkenden Hohlräume 62 das Wärmetauschmedium von der einen zu der anderen «Stange» fliesst. Auf diese Weise kann die gesamte Fläche des Bodens 55a, 55b des Rührflügels oder in entsprechender Weise auch die Seitenwände 57, 58, die Vorderwände 56 oder ggf. Rückwände 45 als Wärmetauschflächen genutzt werden.

Die Erfindung ist jedoch nicht auf die sprossenleiterartige Form der Wärmetauscherkanäle beschränkt, es versteht sich vielmehr, dass auch schlangenförmige Kanäle oder mäanderförmige Kanäle oder dgl. Verwendung finden können. Auch kann der gesamte Hohlraum zwischen den Böden 55a, 55b, ohne dass Querstege 60, 61 vorgesehen sind, von einem Wärmetauschmedium durchsetzt werden.

In Fig. 4a sind weiterhin noch zwei Varianten gestrichelt eingetragen, bei denen die Böden 55a bzw. 55b mit Hindernissen 52 bzw. 53 versehen sind. Das Hindernis 52 hat im wesentlichen dreieckig-prismatische Gestalt und das Hindernis 53 halbzylindrische Gestalt, jeweils in axialer Richtung gesehen. Es versteht sich, dass auch mehrere Hindernisse 52 bzw. 53 radial über den Rührflügel verteilt angeordnet sein können. Der Sinn dieser Hindernisse 52, 53 ist, ein Abrutschen der Weinmaische, insbesondere deren fester Bestandteile, in radialer Richtung zu verhindern, wenn der Rührflügel ganz nach unten in den Saft eingetaucht ist und aus der unteren Extremlage wieder seinen Weg nach oben zu nehmen beginnt. Insbesondere bei intensivem Gären der Weinmaische kann der Rührflügel innerhalb des von ihm umschlossenen Volumens beim Herabdrücken der Weinmaische eine beträchtliche Menge von Gärgasen gesammelt haben, die nach dem Durchlaufen der unteren Extremlage schlagartig unter Mitnahme der festen Maischebestandteile nach oben entweichen. Die zweite Hälfte des Bewegungszyklus der Rührflügel, bei der sich die Rührflügel durch den Traubensaft wieder nach oben drehen, bleibt dann für die Farbstoffauslaugung ungenutzt. Die Hindernisse 52 bis 53 oder mehrere davon können demgegenüber dieses radiale Abrutschen unterbinden oder doch wenigstens so weit verhindern, dass die wesentlichen Bestandteile doch unter dem Einfluss der Rührflügelbewegung durch den Traubensaft wieder bis nach oben gefördert werden.

In Fig. 4a sieht man noch, dass die Vorderwände 56a, 56b zwischen sich einen Hohlraum einschliessen, in dem sich feste Bestandteile der Maische absetzen könnten und der sehr schwer zugänglich ist, weil er sich in unmittelbarer Nähe der Behälterwandung befindet. Um einen hygienischen Betrieb des Rührwerkes 13 zu gewährleisten, kann daher ein gerader Vorderwandabschluss 65 vorgesehen werden, wie in Fig. 4a dargestellt ist. In analoger Weise können die von den Seitenwänden 57a, 57b bzw. 58a, 58b eingeschlossenen Winkel von einem Seitenwandabschluss 66 verschlossen werden, so dass sich insgesamt eine glatte und leicht zu reinigende Oberfläche des Rührflügels ergibt.

Eine Variante gemäss Fig. 4d besteht darin, dass ein gewölbter Vorderwandabschluss 67 verwendet wird, der parallel zur Behälterwandung des kreiszylindrischen Abschnittes 10 des Behälters 1 verläuft. Der gewölbte Vorderwandabschluss 67 schliesst damit keinen Kreisabschnitt mit der Behälterwandung ein, wie dies bei einem geraden Vorderwandabschluss 65 gemäss Fig. 4a der Fall wäre.

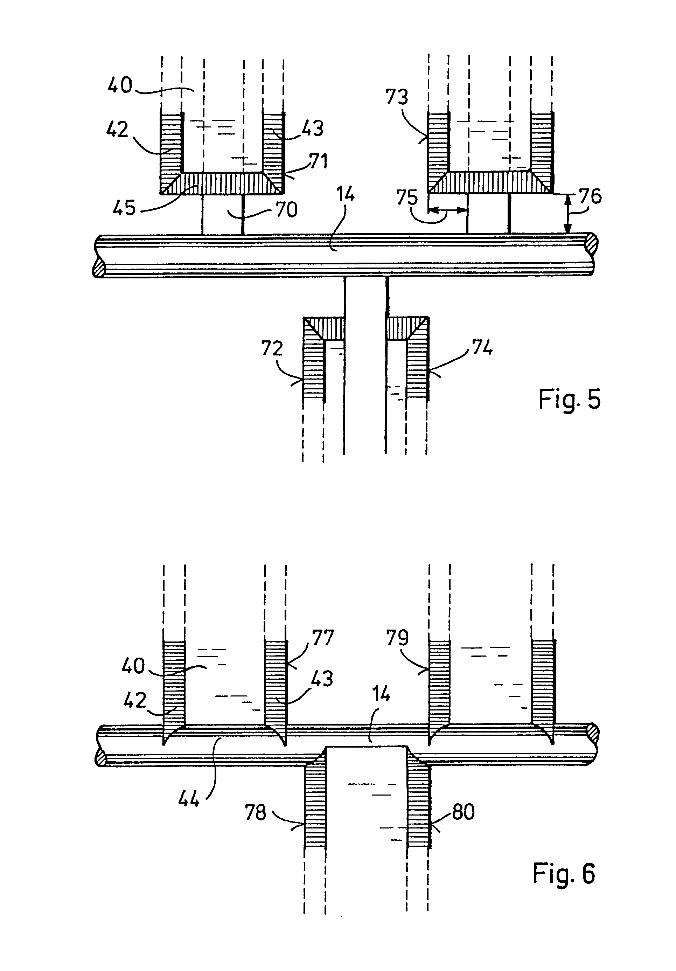

In Fig. 5a ist in einer schematischen Draufsicht auf das Rührwerk 13 und ohne die perspektivischen Verhältnisse infolge des Umfangsversatzes der Rührflügel zu berücksichtigen, der Fall dargestellt, dass die schaufelartige Form der Rührflügel nicht bis zur Welle 14 reicht. Von der Welle 14 erstrecken sich vielmehr Arme 70, auf welche die Böden 40 mit Seitenwänden 42, 43 bzw. Rückwänden 45 aufgesetzt sind. Die Verjüngung des Rührflügels im Bereich des Armes 70 ist mit 75 und der radiale Abstand des wirksamen Bereiches des Rührflügels von der Achse mit 76 bezeichnet.

Ein praktisches Ausführungsbeispiel eines derartigen erfindungsgemässen Behälters weist etwa die folgenden Abmessungen auf:

| | |
|---|---|
| Durchmesser des kreiszylindrischen Abschnittes 10: | 150-350 cm |
| Axiale Länge des Behälters: | 300-500 cm |
| Anzahl der Rührflügel: | 8 |
| Axiale Breite des Umrisses des Rührflügels gemäss Fig. 5: | 50 cm |
| Verjüngungsmass 75 in Fig. 5: | 15 cm |
| Abstandsmass 76 in Fig. 5: | 15 cm |

Wie man weiter aus Fig. 5 erkennen kann, sind unterschiedliche axiale Abstände der Rührflügel voneinander eingezeichnet worden. Während der linke obere und der untere Rührflügel mit ihren Seitenumrissen 71, 72 nicht miteinander fluchten, sondern vielmehr einen positiven axialen Abstand voneinander haben, fluchten die Seitenumrisse 73, 74 des rechten oberen und des unteren Rührflügels miteinander, so dass die Umrisse den axialen Abstand Null voneinander haben. Darüber hinaus ist auch der Fall möglich, dass sich die Seitenumrisse zweier Rührflügel überlappen, so dass ein negativer axialer Abstand dieser Umrisse entsteht. Man erkennt sofort, dass bei Verwendung des linken oberen und des unteren Rührflügels zwischen den Rührflügeln eine Schicht endlicher Dicke, nämlich des Abstandes der Seitenumrisse 71 und 72 voneinander, «stehenbleibt», wenn die Maische gerührt wird. In der Praxis wird selbstverständlich auch in diesem Bereich eine gewisse Durchmischung stattfinden, jedoch wird sie geringer sein, und zwar je geringer, desto grösser der axiale Abstand der Seitenumrisse 71, 72 voneinander ist, als in denjenigen Volumenbereichen, die von den Rührflügeln durchmessen werden. Je geringer nun der axiale Abstand wird, beispielsweise beim Abstand Null des rechten oberen zum unteren Rührflügel in Fig. 5 oder gar bei negativem Abstand, d.h. sich überschneidenden Bewegungsbahnen der Rührflügel, wird eine immer kräftigere Durchmischung der Weinmaische erzielt.

Diese Verhältnisse sind nochmals in Fig. 6 dargestellt, jedoch für den Fall, dass die schaufelartige Form der Rührflügel bis zur Welle 14 reicht, wie dies bereits zu den Fig. 3a und 3b erläutert wurde.

Man erkennt wieder die in positivem, axialem Abstand voneinander angeordneten Seitenumrisse 77, 78 des linken oberen bzw. des unteren Rührflügels und die miteinander fluchtenden Seitenumrisse 79, 80 des rechten oberen bzw. des unteren Rührflügels.

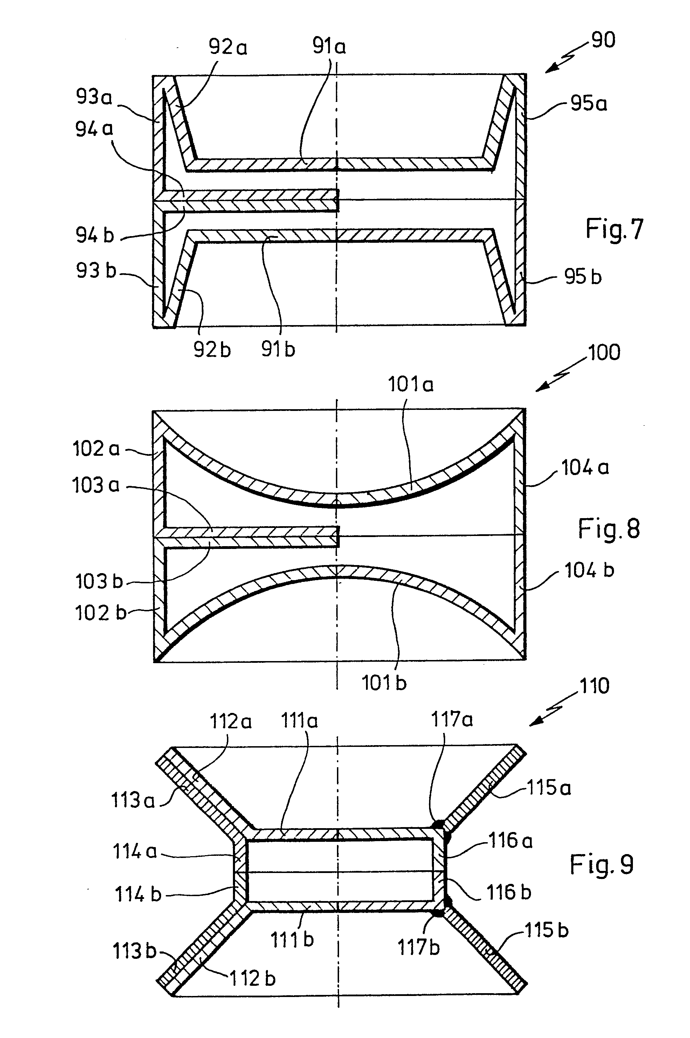

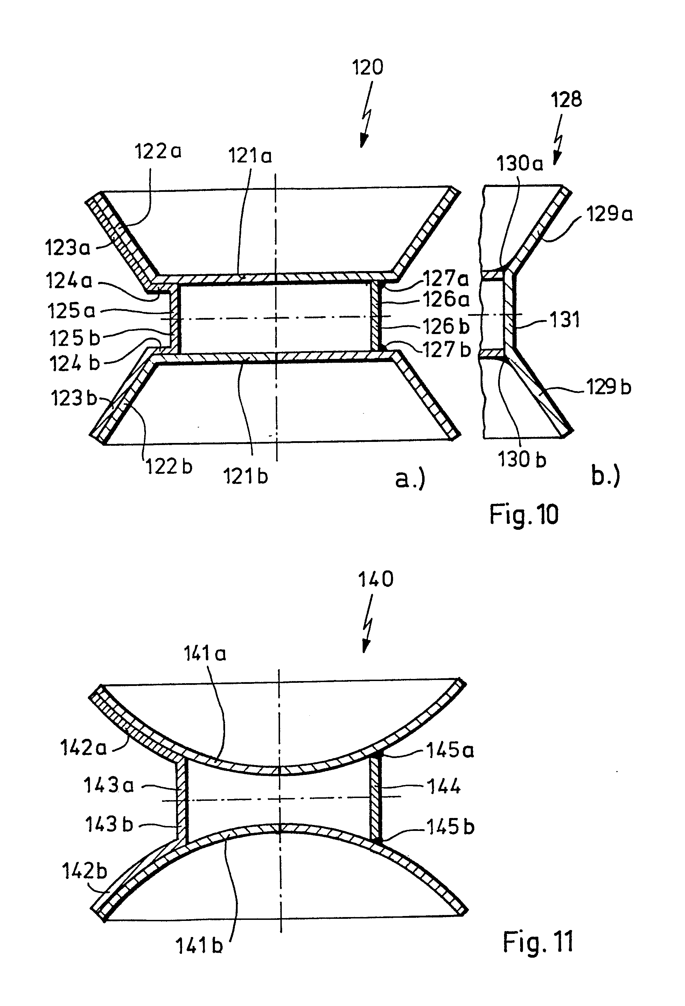

Die Fig. 7 bis 11 zeigen unterschiedliche Querschnittsformen von Rührflügeln, die nach Art von Hohlprofilen mit unterschiedlichen Herstellungsverfahren erzeugt werden können. In der linken und der rechten Hälfte der Fig. 7 bis 11 sind dabei jeweils unterschiedliche Ausführungsformen dargestellt, in Fig. 10a bzw. 10b jedoch sogar nochmals eine weitere Variante.

Der Querschnitt 90 gemäss Fig. 7 kann gemäss deren linken Hälfte durch Aneinanderlegen zweier U-förmiger Hohlprofile mit ersten Böden 91a, 91b, inneren Seitenwänden 92a, 92b, äusseren Seitenwänden 93a, 93b sowie zweiten Böden 94a, 94b gebildet werden. Die beiden einzelnen U-förmigen klappsymmetrischen Hohlprofile können beispielsweise durch Abkanten aus einem geeigneten, einstückigen Zuschnitt hergestellt werden.

Gemäss der rechten Hälfte von Fig. 7 kann auch eine materialsparende Variante dadurch hergestellt werden, dass man die zweiten Böden 94a, 94b weglässt und statt dessen die äusseren Seitenwände 95a, 95b stumpf aufeinanderstösst und, sofern sie nicht einstückig hergestellt sind, an dieser Stelle miteinander verschweisst.

Bei einem anderen Querschnitt 100 gemäss Fig. 8 wird eine diaboloartige Querschnittsform dadurch erzielt, dass gemäss der linken Hälfte von Fig. 8 zwei C-förmige, klappsymmetrische Hohlprofile mit ebenem Rücken aneinandergelegt werden, so dass der Querschnitt 100 durch konvexe erste Böden 101a, 101b, Seitenwände 102a, 102b sowie zweite Böden 103a, 103b gebildet wird. In Analogie zu Fig. 7 werden die zweiten Böden 103a, 103b beim Ausführungsbeispiel gemäss der rechten Hälfte von Fig. 8 fortgelassen, so dass die Seitenwände 104a, 104b stumpf aneinanderstossen. Man erkennt, dass das Ausführungsbeispiel gemäss Fig. 8 keine äusseren Ecken aufweist und daher besonders leicht gereinigt werden kann.

Bei einem weiteren Querschnitt 110, wie er in Fig. 9 dargestellt ist, ist ein rechteckförmiger Abschnitt vorgesehen, von dessen Ecken aus sich die Seitenwände erstrecken. Hierzu weist die Variante gemäss der linken Hälfte von Fig. 9 Böden 111a, 111b, geneigte erste Seitenwände 112a, 112b, ebenso geneigte zweite Seitenwände 113a, 113b sowie senkrecht verlaufende dritte Seitenwände 114a, 114b auf. Man erkennt, dass das Gebilde der linken Hälfte von Fig. 9 aus einer einzigen Abwicklung durch Umkanten hergestellt werden kann, weil die Seitenwände durch Falten aus den zweiten und dritten Seitenwänden 112, 113 gebildet werden.

Während die Variante gemäss der linken Hälfte von Fig. 9 ohne Schweissstellen auskommen kann, sind bei der Variante gemäss der rechten Hälfte von Fig. 9 die Seitenwände als fünfte, geneigte Seitenwände 115a, 115b ausgebildet, die im Bereich der Ecken an die senkrechten fünften Seitenwände 116a, 116b mit Schweissstellen 117a, 117b angeschweisst sind.

Man erkennt aus Fig. 9, dass die als reine Abwicklung herstellbare Variante der linken Figurenhälfte materialaufwendiger ist, die Variante der rechten Figurenhälfte jedoch mehrere Einzelteile und verschiedene Arbeitsgänge mit unterschiedlichen Bearbeitungsgeräten erfordert.

Fig. 10 zeigt weitere Querschnitte 120 und 128, die denjenigen der Fig. 9 ähneln. Bei diesen Querschnitten wird ebenfalls von einem rechteckförmigem Abschnitt ausgegangen, von dessen Ecken sich die Seitenwände weg erstrecken. Allerdings sind die Seitenwände beim Ausführungsbeispiel gemäss Fig. 10a abgekröpft, d.h. sie verlaufen zunächst noch in Richtung der jeweiligen Böden und erst dann schräg nach aussen. Demgemäss besteht der Querschnitt 120 der linken Figurenhälfte von Fig. 10a aus Böden 121a, 121b, ersten, geneigten Seitenwänden 122a, 122b, zweiten gleichermassen geneigten Seitenwänden 123a, 123b, dritten, parallel zu den Böden 121a, 121b verlaufenden Seitenwänden 124a, 124b sowie schliesslich senkrecht verlaufenden Seitenwänden 125a, 125b.

In der rechten Figurenhälfte von Fig. 10a findet sich wieder eine demgegenüber materialsparende Lösung, bei der jedoch Teile eingeschweisst werden müssen, und zwar anstelle der senkrecht verlaufenden vierten Seitenwände 125a, 125b, fünfte Seitenwände 126a, 126b, die mit Schweissstellen 127a, 127b an den Boden 121 angeschweisst sind. Die Seitenwände 126a, 126b können selbstverständlich aus einem gemeinsamen Materialstück bestehen.

Eine Variante zur rechten Figurenhälfte von Fig. 10a zeigt Fig. 10b mit einem etwas abweichenden Querschnitt 128, bei dem die Seitenwände durch geneigte sechste Seitenwände 129 gebildet werden, die mit der senkrecht verlaufenden Seitenwand 131 einstückig sind. Dieses einstückige Gebilde ist mittels Schweissstellen 130a, 130b an die Böden 121a, 121b angeschweisst.

Schliesslich zeigt Fig. 11 noch einen weiteren Querschnitt 141, der wieder eine diaboloartige Form hat, weil konvexe Böden 141a, 141b verwendet werden, die gleichzeitig den Boden sowie die inneren schrägen Seitenwände bilden. In der linken Figurenhälfte von Fig. 11 ist wieder ein einstückig abwickelbarer Querschnitt dargestellt, bei dem ferner noch erste konvexe Seitenwände 142a, 142b sowie zweite, senkrechte Seitenwände 143a, 143b vorgesehen sind.

In Analogie zu den vorstehenden Fig. 9 und 10 zeigt die rechte Figurenhälfte von Fig. 11 wiederum eine materialsparende Version, bei der eine einstückige, senkrecht verlaufende dritte Seitenwand 144 mit Schweissstellen 145a, 145b zwischen die konvexen Böden 141a, 141b geschweisst ist. Allgemein gilt zu den rechten Figurenhälften der Fig. 9 bis 11, dass von den drei Elementen «Boden», «schräge Seitenwand» und «senkrechte Seitenwand» jeweils zwei miteinander einstückig sind und das jeweils dritte angeschweisst ist. In Fig. 9 sind nämlich der Boden 111a, 111b und die senkrechte Seitenwand 116a, 116b miteinander einstückig und die schrägen Seitenwände 115a, 115b sind angeschweisst, während in Fig. 10a und Fig. 11 jeweils Boden und schräge Wand einstückig sind, während die senkrechte Seitenwand eingeschweisst ist und schliesslich ist in Fig. 10 die senkrechte Seitenwand mit den schrägen Seitenwänden einstückig und an den Boden angeschweisst.

Zusammenfassend gilt, dass im Rahmen der vorliegenden Erfindung eine Vielzahl von Querschnittsformen realisiert werden kann, ohne den Schutzbereich der Erfindung zu verlassen. Insbesondere die Ausführungsformen der Fig. 7 bis 11 sind daher ausschliesslich als Erläuterung, keinesfalls jedoch als Einschränkung zu verstehen.

Erfindungsgemäss kann der Behälter und/oder das Rührwerk aus Stahl, Edelstahl oder Kunststoff bestehen.

## Patentansprüche

1. Liegender Behälter zur Behandlung von Weinmaische, insbesondere Gärtank (1), mit einem Rührwerk (13), dessen Welle (14) parallel zu einer Achse (15) des Behälters verläuft, wobei die Welle (14) mit einer Mehrzahl von im wesentlichen radial verlaufenden Rührflügeln (20 bis 27) versehen ist, die über die Länge der Welle (14) verteilt im Abstand voneinander angeordnet und wenigstens abschnittsweise plattenartig ausgebildet sind, derart, dass die flache Seite des plattenartigen Abschnittes in Drehrichtung der Welle (14) weist, dadurch gekennzeichnet, dass die Rührflügel (20 bis 27) im Bereich ihrer radial verlaufenden Kanten wenigstens abschnittsweise mit Seitenwänden (42, 43, 57, 58, 92, 101, 112, 115, 122, 129, 141) versehen sind, die gegenüber dem radialen mittleren Bereich eines die flache Seite der Rührflügel (20 bis 27) bildenden Bodens (40, 55, 91, 101, 111, 121, 141) geneigt sind.

2. Behälter nach Anspruch 1, dadurch gekennzeichnet, dass die Seitenwände (42, 43, 57, 58, 92, 101, 112, 115, 122, 129, 141) über die ganze Länge der Kanten der Rührflügel (20 bis 27) verlaufen.

3. Behälter nach Anspruch 1, dadurch gekennzeichnet, dass die Seitenwände (42, 43, 57, 58, 92, 101, 112, 115, 122, 129, 141) ab einem Abstand (76) von der Welle (14) bis zum freien Ende des Rührflügels (20 bis 27) verlaufen, wobei vorzugsweise im Abstand zwischen den Enden der Seitenwände (42, 43, 57, 58, 92, 101, 112, 115, 122, 129, 141) eine Rückwand (45) angeordnet ist.

4. Behälter nach einem der Ansprüche 1 bis 3, dadurch gekennzeichnet, dass die Rührflügel (20 bis 27) an ihrem freien Ende mit einer Vorderwand (41, 56) versehen sind, die gegenüber dem radialen mittleren Bereich des Bodens (40, 55) geneigt ist und die seitlich in die Seitenwände (42, 43; 57, 58) übergeht.

5. Behälter nach einem der Ansprüche 1 bis 4, dadurch gekennzeichnet, dass der Boden (40a) tangential zum Umfang der Welle (14) verläuft.

6. Behälter nach einem der Ansprüche 1 bis 4, dadurch gekennzeichnet, dass die sich im wesentlichen radial erstreckenden Böden (40, 55, 91, 101, 111, 121, 141) jeweils mit einem sich in die eine Drehrichtung der Welle (14) öffnenden Paar Seitenwände (57a, 58a; 92a; 112a, 115a; 122a) und einem sich in die entgegengesetzte Drehrichtung öffnenden Paar Seitenwände (57b, 58b; 92b; 112b, 115b; 122b) versehen sind.

7. Behälter nach einem der Ansprüche 1 bis 6, dadurch gekennzeichnet, dass Boden und Seitenwand gemeinsam von einem konkav gekrümmten Boden (101, 141) gebildet werden.

8. Behälter nach einem der Ansprüche 1 bis 7, dadurch gekennzeichnet, dass die Rührflügel (20 bis 27) mit Böden (91, 101, 111, 121, 141) und Seitenwänden (92, 93, 95; 101; 102, 104; 112 bis 114; 122 bis 125; 141; 142, 143) und ggf. Vorderwänden als mindestens ein Hohlprofil aus einem vorzugsweise einstückigen Zuschnitt ausgebildet sind.

9. Behälter nach Anspruch 8, dadurch gekennzeichnet, dass der Umriss des Hohlprofils im Querschnitt die Gestalt eines U, zweier mit der flachen Seite aneinanderliegender U, eines I, eines C, zweier mit einem flachen Rücken aneinanderliegender C oder eines Diabolo hat (Fig. 7 und 8).

10. Behälter nach Anspruch 8 oder 9, dadurch gekennzeichnet, dass der Boden (111, 121, 141) Teil eines im Querschnitt wenigstens näherungsweise rechteckförmigen Abschnittes (111, 114; 121, 125; 141, 143) ist, von dessen Ecken weg die Seitenwände (112, 113; 122 bis 124; 141, 142) als zweilagige, vorzugsweise abgekröpfte, Falte ausgeformt sind.

11. Behälter nach einem der Ansprüche 1 bis 9, dadurch gekennzeichnet, dass der Boden (111, 121, 141) Teil eines im Querschnitt wenigstens näherungsweise rechteckförmigen Abschnittes (111, 116; 121, 126; 141, 144) ist, von dessen Kanten die Seitenwände (115, 129, 141) ausgehen, wobei von den zwei Rechteckseiten und der einen Seitenwand jeweils zwei Teile einstückig und das dritte angeschweisst ist bzw. sind.

12. Behälter nach einem der Ansprüche 1 bis 11, dadurch gekennzeichnet, dass die freien Enden der Paare von Seitenwänden (57a, 58a; 92a; 112a, 115a; 122a bzw. 57b, 58b; 92b; 112b, 115b; 122b) mittels eines radialen Seitenwandabschlusses (66) miteinander verbunden sind, der vorzugsweise tangential derart verläuft, dass er nach aussen gewölbt ist und sich in der Nähe der Wandung eines kreiszylindrischen Abschnittes (10) des Behälters (1) befindet, wobei die Wölbung parallel zur Wandung verläuft.

13. Behälter nach einem der Ansprüche 1 bis 12, dadurch gekennzeichnet, dass die Rührflügel einen in Drehrichtung der Welle (14) rechteckförmigen Umriss haben und ihre Bewegungsbahnen aneinander grenzen.

14. Behälter nach einem der Ansprüche 1 bis 12, dadurch gekennzeichnet, dass die Umrisse der Rührflügel (22 bis 27) in Drehrichtung der Welle (14) so breit gewählt sind, dass ihre Bewegungsbahnen einander überschneiden.

15. Behälter nach einem der Ansprüche 1 bis 14, dadurch gekennzeichnet, dass die Umrisse der Rührflügel (27) in Drehrichtung der Welle (14) sich radial nach aussen oder nach innen verjüngen.

16. Behälter nach einem der Ansprüche 1 bis 15, dadurch gekennzeichnet, dass sich in oder an den Böden (40, 55, 91, 101, 111, 121, 141) und/oder Seitenwänden (42, 43, 57, 58, 92, 101, 112, 115, 122, 141) und/oder Vorderwänden (41, 56) und/oder Rückwänden (45) Hohlräume (48, 62) befinden, in die ein Wärmetauschmedium einleitbar ist.

17. Behälter nach einem der Ansprüche 1 bis 16, dadurch gekennzeichnet, dass zum Verhindern eines Abrutschens der Weinmaische in radialer Richtung an den Rührflügeln (20 bis 27) der deren flache Seite bildende Boden (55a, 55b) mit wenigstens einem höckerartigen Hindernis (52, 53) von wenigstens teilweise axialer Erstreckung versehen ist.

18. Behälter nach Anspruch 17, dadurch gekennzeichnet, dass das Hindernis (52, 53) im radialen Schnitt prismatisch oder halbzylindrisch ausgebildet ist.

**Claims**

1. Horizontal tank for treating grape mash, in particular a fermentation tank (1), comprising an agitator (13) whose shaft (14) extends in parallel to a tank axis (15) and carries a plurality of paddles (20 to 27) which are spaced over the length of the shaft (14), extend substantially in the radial direction and exhibit at least in certain sections thereof a plate-like configuration so that the flat face of the plate-shaped section faces forwards in the direction of rotation of the shaft (14), characterized in that the agitator paddles (20 to 27) are provided in the area of their radially extending edges with side walls (42, 43, 57, 58, 92, 101, 112, 115, 122, 129, 141) extending along at least certain parts of the said edges and at an angle relative to the radial central portion of a bottom (40, 55, 91, 101, 111, 121, 141) forming the flat face of the agitator paddles (20 to 27).

2. Tank according to claim 1, characterized in that the side walls (42, 43, 57, 58, 92, 101, 112, 115, 122, 129, 141) extend over the full length of the edges of the paddles (20 to 27).

3. Tank according to claim 1, characterized in that the side walls (42, 43, 57, 58, 92, 101, 112, 115, 122, 129, 141) begin at a distance (76) from the shaft (14) and extend to the free end of the paddle (20 to 27), a real wall (45) being preferably provided at a distance between the ends of the side walls (42, 43, 57, 58, 92, 101, 112, 115, 122, 129, 141).

4. Tank according to any of claims 1 to 3, characterized in that the paddles (20 to 27) are provided on their free ends with a front wall (41, 56) which is inclined relative to the radial central portion of the bottom (40, 55) and which ends laterally in the side walls (42, 43; 57, 58).

5. Tank according to any of claims 1 to 4, characterized in that the bottom (40a) extends tangentially to the periphery of the shaft (14).

6. Tank according to any of claims 1 to 4, characterized in that the bottoms (40, 55, 91, 101, 111, 121, 141) which extend substantially in radial directions are provided each with one pair of side walls (57a, 58a; 92a; 112a, 115a; 122a) opening towards the one direction of rotation of the shaft (14) and one pair side walls (57b, 58b; 92b; 112b, 115b; 122b) opening in the opposite direction of rotation.

7. Tank according to any of claims 1 to 6, characterized in that the bottom and the side wall are commonly formed by a concavely curved bottom (101, 141).

8. Tank according to any of claims 1 to 7, characterized in that the paddles (20 to 27) together with their bottoms (91, 101, 111, 121, 141) and side walls (92, 93, 95; 101; 102, 104; 112 to 114; 122 to 125; 141; 142, 143) and possibly also their front walls are designed as at least one hollow profile and made preferably from a single blank.

9. Tank according to claim 8, characterized in that the cross-sectional contour of the hollow profile has the shape of a U, or has the shape of two Us joined by their flat faces, or has the shape of an I, or has the shape of a C, the C having a flat back, or has the shape of two Cs joined by their flat backs, or has a diabolo shape (Figures 7 and 8).

10. Tank according to any of claims 1 to 9, characterized in that the bottom (111, 121, 141) is part of a section (111, 114; 121, 125; 141, 143) of at least approximately rectangular shape, the side walls (112, 113; 122 to 124; 141, 142) being formed on the corners of such section by two-ply folds, which preferably are bent off.

11. Tank according to any of claims 1 to 9, characterized in that the bottom (111, 121, 141) is part of a section (111, 116; 121, 125; 141, 144) of at least approximately rectangular shape with the side walls (115, 129, 141) extending from its corners, and that of the two sides of the rectangle and the one side wall two elements are formed as integral parts while the third one is connected by welding.

12. Tank according to any of claims 1 to 11, characterized in that the free ends of the pairs of side walls (57a, 58a; 92a; 112a, 115a; 122a and 57b, 58b; 112b, 115b; 122b) are connected by means of a radial lateral end piece (66), the latter extending preferably tangentially and being curved outwardly and located near the wall of a circular cylindrical portion (10) of the tank (1), the curvature extending parallel to the wall.

13. Tank according to any of claims 1 to 12, characterized in that the paddles have a rectangular contour in the direction of rotation of the shaft (14) and that their paths of movement adjoin each other.

14. Tank according to any of claims 1 to 13, characterized in that the width of the contours of the paddles (22 to 27) in the direction of rotation of the shaft (14) is such that their paths of movement overlap.

15. Tank according to any of claims 1 to 14, characterized in that the contours of the paddles (27) taper radially outwardly or inwardly in the direction of rotation of the shaft (14).

16. Tank according to any of claims 1 to 15, characterized in that hollow spaces (48, 62) for introduction of a heat exchanger fluid are disposed in or on the bottoms (40, 55, 91, 101, 111, 121, 141) and/or the side walls (42, 43, 57, 58, 92, 101, 112, 115, 122, 129, 141) and/or the front walls (41, 56) and/or the rear walls (45).

17. Tank according to any of claims 1 to 16, characterized in that to prevent slipping of the grape mash in the radial direction of the paddles (20 to 27) the bottom (55a, 55b) forming the flat face thereof is provided with a least one hump-shaped obstacle (52, 53) having at least partially a certain axial extension.

18. Tank according to claim 17, characterized in that the radial cross-section of the obstacle (52, 53) exhibits a prismatic or semi-cylindrical shape.

**Revendications**

1. Citerne couchée pour le traitement de moûts de raisin, en particulier citerne de fermentation (1), avec une agitation (13), dont l'axe (14) est parallèle à un axe de la citerne, cet axe (14) étant muni d'une pluralité de pales d'agitation (20 à 27) sensiblement radiales, qui sont réparties de manière espacée sur la longueur de l'axe et ont au moins en partie une forme pleine, de sorte que le côté plat de la partie plane se trouve dans le sens de la rotation de l'arbre (14), caractérisée en ce que les pales d'agitation (20 à 27) sont munies au moins en partie, dans la zone de leurs arêtes radiales, de parois latérales (42, 43, 57, 58, 92, 101, 112, 115, 122, 129, 141) qui sont inclinées par rapport à la zone radiale médiane d'un fond (40, 55, 91, 101, 111, 121, 141) formant un côté plat des pales d'agitation (20 à 27).

2. Citerne selon la revendication 1, caractérisée en ce que les parois latérales (42, 43, 57, 58, 92, 101, 112, 115, 122, 129, 141) s'étendent sur toute la longueur des arêtes des pales d'agitation (20 à 27).

3. Citerne selon la revendication 1, caractérisée en ce que les parois latérales (42, 43, 57, 58, 92, 101, 112, 115, 122, 129, 141) s'étendent à partir d'une certaine distance (76) de l'axe (14) jusqu'à l'extrémité libre de la pale d'agitation (20 à 27), avec de préférence une paroi arrière (45) disposée à distance entre les extrémités des parois latérales (42, 43, 57, 58, 92, 101, 112, 115, 122, 129, 141).

4. Citerne selon l'une des revendications 1 à 3, caractérisée en ce que les pales d'agitation (20 à 27) sont munies, à leur extrémité libre, d'une paroi avant (41, 56), qui est inclinée par rapport à la zone radiale médiane du fond (40, 45) et se transforme latéralement en parois latérales (42, 43, 57, 58).

5. Citerne selon l'une des revendications 1 à 4, caractérisée en ce que le fond (40a) s'étend tangentiellement à la périphérie de l'axe (14).

6. Citerne selon l'une des revendications 1 à 4, caractérisée en ce que les fonds radiaux (40, 55, 91, 101, 111, 121, 141) sont munis chacun de deux parois latérales (57a, 58a; 92a; 112a, 115a; 122a) s'ouvrant dans le sens de rotation de l'arbre (14) et de deux parois (57b, 58b; 92b; 112b, 115b; 122b) s'ouvrant dans le sens de rotation contraire.

7. Citerne selon l'une des revendications 1 à 6, caractérisée en ce que le fond et la paroi latérale sont formés ensemble par un fond courbé concave.

8. Citerne selon l'une des revendications 1 à 7, caractérisée en ce que les pales d'agitation (20 à 27) sont formées de fonds (91, 101, 111, 121, 141) et de parois latérales (92, 93, 95; 101, 102, 104; 112 à 114; 122 à 125; 141, 142, 143) et éventuellement de parois avant sous forme d'au moins un profil creux de préférence d'un seul tenant.

9. Citerne selon la revendication 8, caractérisée en ce que le contour de la section transversale du profil creux a la forme d'un U, de deux U adjacents au côté plat, d'un I, d'un C, de deux C adjacents à un dos plat ou d'un diabolo (fig. 7 et 8).

10. Citerne selon la revendication 8 ou 9, caractérisée en ce que le fond (111, 121, 141) est la partie d'une section de section transversale ayant au moins approximativement la forme d'un rectangle (111, 114; 121, 125; 141, 143), dont les coins loin des parois latérales (112, 113; 122 à 124; 141, 142) sont en forme de pli à double couche de préférence coudé.

11. Citerne selon l'une des revendications 1 à 9, caractérisée en ce que le fond (111, 121, 141) est partie d'une section de section transversale au moins approximativement rectangulaire (111, 116; 121, 126; 141, 144) des arêtes de laquelle partent les parois latérales (115, 129, 141), deux parties parmi les deux côtés arrière et une paroi latérale étant à chaque fois d'un seul tenant et la troisième partie y étant soudée.

12. Citerne selon l'une des revendications 1 à 11, caractérisée en ce que les extrémités libres des paires de parois latérales (57a, 58a; 92a; 112a, 115a; 122a ou 57b, 58b; 92b; 112b, 115b; 122b) sont reliées ensemble par une terminaison latérale (66) de la paroi latérale, qui s'étend de préférence tangentiellement de sorte qu'elle est courbée vers l'extérieur et se trouve au voisinage de la paroi d'une section cylindrique circulaire (10) du récipient (1), la courbure étant parallèle à la paroi.

13. Citerne selon l'une des revendications 1 à 12, caractérisée en ce que les pales d'agitation ont dans le sens de rotation de l'axe (14) un contour rectangulaire et leurs courses sont adjacentes l'une de l'autre.

14. Citerne selon l'une des revendications 1 à 12, caractérisée en ce que les contours des pales d'agitation (22 à 27) sont dans le sens de rotation de l'axe (14), d'une largeur telle que leurs courses se recoupent.

15. Citerne selon l'une des revendications 1 à 14, caractérisée en ce que le contour des pales d'agitation (27) se rétrécissent dans le sens de la rotation de l'axe (14), radialement vers l'extérieur ou vers l'intérieur.

16. Citerne selon l'une des revendications 1 à 15, caractérisée en ce que se trouvent des espaces creux (48, 62), dans lesquels peut être introduit un milieu échangeur de chaleur, dans ou sur les fentes (40, 55, 91, 101, 111, 121, 141) et/ou les parois latérales (42, 43, 57, 58, 92, 101, 112, 115, 122, 129, 141) et/ou des parois avant (41, 56) et/ou des parois arrière (45).

17. Citerne selon l'une des revendications 1 à 16, caractérisée en ce que pour empêcher l'écroulement du moût dans la direction radiale sur les pales d'agitation (20 à 27), le fond (55a, 55b) formant leur côté plat est muni d'au moins un obstacle (52, 53) en forme d'une protubérance, d'une direction au moins partiellement axiale.

18. Citerne selon la revendication 17, caractérisée en ce que l'obstacle (52, 53) a une coupe radiale prismatique ou semi-cylindrique.

0 149 202

Fig. 1

Fig. 2

Fig. 3

Fig. 4

Fig. 5

Fig. 6

0 149 202

Fig. 7

Fig. 8

Fig. 9

19

Fig. 10

Fig. 11